# EUROPEAN PATENT APPLICATION

(11) **EP 4 764 373 A1**
(43) Date of publication of application: **24.06.2026**
(21) Application number: 24853820.9
(22) Date of filing: 14.08.2024
(51) Int. Cl.: F25D 25/02

(54) **FRESH-KEEPING STORAGE CONTAINER AND REFRIGERATOR**

(30) Priority: 15.08.2023 CN 202311027615
(71) Applicant: QINGDAO HAIER REFRIGERATOR CO., LTD., Qingdao, Shandong 266101 (CN); Qingdao Haier Smart Technology R&D Co., Ltd., Qingdao, Shandong 266101 (CN); HAIER SMART HOME CO., LTD., Qingdao, Shandong 266101 (CN)
(72) Inventor: YI, Yao, Qingdao, Shandong 266101 (CN); LI, Yunlong, Qingdao, Shandong 266101 (CN); LIU, Haoquan, Qingdao, Shandong 266101 (CN)
(74) Representative: Winter, Brandl - Partnerschaft mbB
(86) International application number: PCT/CN2024/112102
(87) International publication number: WO 2025/036413

(57) **Abstract**

The present application provides a fresh-keeping storage container and a refrigerator. The fresh-keeping storage container comprises: an inner barrel body, having a fresh-keeping storage space therein for placing stored items; a first magnetic field assembly, disposed outside a side wall of the inner barrel body; a conveying air duct for to pass through is formed between the first magnetic field assembly and the side wall of the inner barrel body. The conveying air duct is disposed between the first magnetic field assembly and the inner barrel body, so that the cooling airflow is closer to the fresh-keeping storage space, and can refrigerate the fresh-keeping storage space more quickly during a refrigeration process, thereby accelerating a cooling speed, reducing an effective time for bacterial reproduction, and thus extending a fresh-keeping period.

## Description

The present application is based on and claims priority to Chinese Patent Application No. 202311027615.9, filed on August 15, 2023, the entire contents of which are incorporated herein by reference.

### TECHNICAL FIELD

The present application relates to refrigerated and frozen storage devices, and particularly relates to a fresh-keeping storage container and a refrigerator.

### BACKGROUND

A fresh-keeping storage effect of household refrigerated and frozen equipment such as refrigerators has become an important indicator for measuring the performance of such equipment. Fresh meat, fish and shrimp and other food materials are prone to problems of juice loss leading to poor taste and color darkening during storage.

Existing research found that magnetic fields had a significant impact on the formation of ice crystals during a freezing process. Technicians also attempted to apply magnetic fresh-keeping technology to household refrigerated and frozen equipment, but the achieved technical effects were not satisfactory. An important reason for the poor effects described above is that magnetic field devices affect a refrigeration process. On one hand, the magnetic field devices affect the refrigeration of storage spaces; on the other hand, when using electromagnetic coil magnetic field elements, the electromagnetic coils also generate heat, causing significant fluctuations in a refrigeration temperature.

Any prior art mentioned in the specification does not indicate confirmation or suggestion that the prior art constitutes part of common knowledge in any jurisdiction, or that the prior art can be reasonably expected to be understood, regarded as relevant and/or combined with other prior art by those skilled in the art.

### SUMMARY

One object of the present application is to provide a fresh-keeping storage container and a refrigerator that improve the refrigeration speed of a storage space.

A further object of the present application is to avoid temperature fluctuations in a storage space caused by an electromagnetic coil.

In particular, the present application provides a fresh-keeping storage container, including:
an inner barrel body having a fresh-keeping storage space therein for placing stored items;
a first magnetic field assembly disposed outside a side wall of the inner barrel body; and a conveying air duct for cooling airflow to pass through is formed between the first magnetic field assembly and the side wall of the inner barrel body.

Optionally, the fresh-keeping storage container further includes:
an air duct member disposed between the first magnetic field assembly and the side wall of the inner barrel body, and configured to define the conveying air duct.

Optionally, the fresh-keeping storage container further includes:
the air duct member is provided with a thermal insulation layer between the conveying air duct and the side wall of the inner barrel body.

Optionally, the thermal insulation layer is configured as thermal insulating foam material with a thickness ranging from 5 to 10 mm; or
the thermal insulation layer is configured as a vacuum insulation panel with a thickness ranging from 2 to 5 mm.

Optionally, a cold storage component is disposed between the conveying air duct and the side wall of the inner barrel body, the cold storage component is configured to store cooling capacity when the conveying air duct is ventilating, and release the cooling capacity to the fresh-keeping storage space through the side wall of the inner barrel body when the conveying air duct stops ventilating.

Optionally, the air duct member provides at least one flow dividing rib disposed in the conveying air duct, the at least one flow dividing rib is configured to separate the airflow flowing through the conveying air duct into multiple airflow channels, and configured such that the airflow flowing through each airflow channel is substantially equivalent.

Optionally, the air duct member is made of thermal insulating foam material.

Optionally, the fresh-keeping storage container described above further includes:
a barrel shell disposed outside the inner barrel body, and an interlayer space is provided between the barrel shell and at least one side wall of the inner barrel body,
the first magnetic field assembly and the air duct member are both disposed in the interlayer space.

Optionally, the first magnetic field assembly includes:
a first magnetic conductive plate disposed on the inner side of the side wall of the barrel shell;
a first magnetic source plate abutting against an inner side of the first magnetic conductive plate, opposite to the air duct member.

Optionally, the first magnetic field assembly is disposed above a top wall of the inner barrel body, the conveying air duct is communicated with a fresh-keeping container air supply channel that provides to the fresh-keeping storage container, and serves as an air supply section for introducing the cooling airflow.

Optionally, the inner barrel body has a front opening; and the fresh-keeping storage container further includes:
a drawer slidably disposed in the inner barrel body, and the drawer includes a drawer end plate assembly, the drawer end plate assembly seals the front opening when the drawer is placed in the inner barrel body, an air passage section is defined within the drawer end plate assembly, the air passage section is communicated with the air supply section; a cold transfer section is formed between a lower portion of the drawer and the inner barrel body and is communicated with the air passage section.

Optionally, the fresh-keeping storage container further includes:
a second magnetic field assembly disposed outside the side wall of the inner barrel body away from the first magnetic field assembly, thereby disposed opposite to the first magnetic field assembly, such that the fresh-keeping storage space is located between the first magnetic field assembly and the second magnetic field assembly.

Optionally, the first magnetic field assembly cooperates with the second magnetic field assembly to form a magnetic field in the fresh-keeping storage space, the magnetic field has an effective magnetic flux density ranging from 10-100GS and an effective magnetic field spacing ranging from 60-240mm.

According to another aspect of the present application, a refrigerator is further provided, including any of the fresh-keeping storage containers described above.

In the fresh-keeping storage container and the refrigerator of the present application, the conveying air duct is disposed between the first magnetic field assembly and the inner barrel body, so that the conveying air duct is closer to the fresh-keeping storage space, and can refrigerate the fresh-keeping storage space more quickly during a refrigeration process, thereby accelerating a cooling speed, reducing an effective time for bacterial reproduction, and thus extending a fresh-keeping period.

Further, in the fresh-keeping storage container and the refrigerator of the present application, in order to improve a fresh-keeping effect and avoid the fresh-keeping effect being affected by excessively low temperatures in some areas of the fresh-keeping storage space, a thermal insulation layer is further disposed between the inner barrel body and the air supply section, and a corresponding thickness range is set according to the material of the thermal insulation layer, which ensures both the cooling speed and avoids excessively low local temperatures.

Furthermore, the fresh-keeping storage container and the refrigerator of the present application combine a magnetic fresh-keeping technology with a high-precision and high-stability refrigeration technology, greatly improving the fresh-keeping effect and extending the fresh-keeping storage time.

According to the detailed description of the specific embodiments of the present application in conjunction with the accompanying drawings below, those skilled in the art will more clearly understand the above and other objects, advantages and features of the present application.

The term "comprise" and variations of this term used herein, such as "comprises", "comprised", "comprising", "including", "containing", do not exclude other features, components, elements or steps unless the context clearly requires otherwise.

### BRIEF DESCRIPTION OF DRAWINGS

Some specific embodiments of the present application will be described in detail below with reference to the accompanying drawings in an exemplary and nonlimiting manner. The same reference numerals in the drawings indicate the same or similar parts or portions. Those skilled in the art should understand that these drawings are not necessarily drawn to scale. In the drawings:
Fig. 1 is a schematic diagram of a refrigerator according to an embodiment of the present application;
Fig. 2 is a schematic diagram of the refrigerator shown in Fig. 1 with an upper door body hidden;
Fig. 3 is a schematic diagram of an air path for the refrigerator according to an embodiment of the present application to supply to a fresh-keeping storage container;
Fig. 4 is a front view of a fresh-keeping storage container according to an embodiment of the present application;
Fig. 5 is a schematic diagram of the fresh-keeping storage container according to an embodiment of the present application from another angle;
Fig. 6 is a schematic diagram of the fresh-keeping storage container according to an embodiment of the present application from yet another angle;
Fig. 7 is a cross-sectional view of the fresh-keeping storage container shown in Fig. 4 along a direction A-A;
Fig. 8 is a partial enlarged view of a portion C in Fig. 7;
Fig. 9 is a cross-sectional view of Fig. 4 along a direction B-B;
Fig. 10 is a schematic diagram of a magnetic field device in the fresh-keeping storage container according to an embodiment of the present application; and
Fig. 11 is an exploded view of components of the magnetic field device shown in Fig. 10.

### DETAILED DESCRIPTION OF EMBODIMENTS

Those skilled in the art should understand that the embodiments described below are only some embodiments of the present application, not all embodiments of the present application, and these embodiments are intended to explain the technical principles of the present application, not to limit the protection scope of the present application. Based on the embodiments provided by the present application, all other embodiments obtained by those of ordinary skill in the art without creative work should still fall within the protection scope of the present application.

In the description of the present embodiment, it should be understood that the orientation or positional relationships indicated by terms such as "longitudinal", "transverse", "length", "width", "thickness", "upper", "lower", "front", "rear", "left", "right", "vertical", "horizontal", "top", "bottom" are based on the orientation or positional relationships shown in the drawings, and are only for the convenience of describing the present embodiment and simplifying the description, and do not indicate or imply that the referred device or element must have a specific orientation, be constructed and operated in a specific orientation, and therefore should not be understood as limiting the present application. For example, unless specifically defined otherwise, in the present embodiment, a direction from a refrigerator cabinet toward a door body is taken as front, a direction from the door body toward the cabinet is taken as rear, a direction toward a ground on which the refrigerator is installed is taken as down, and a direction opposite to the ground is taken as up.

Furthermore, the terms "first" and "second" are used for descriptive purposes only and should not be understood as indicating or implying relative importance or implicitly indicating the number of the indicated technical features. Thus, features defined with "first" and "second" may explicitly or implicitly include one or more of such features. In the description of the present application, "multiple" means two or more, unless otherwise clearly and specifically defined.

Further, it should be noted that in the description of the present application, unless otherwise clearly specified and defined, terms such as "mounted", "connected", "coupled" should be understood in a broad sense. For those skilled in the art, the specific meanings of the above terms in the present application can be understood according to specific circumstances.

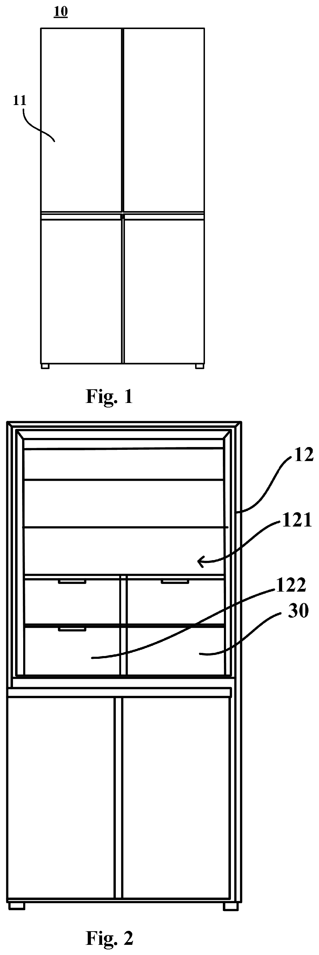

Fig. 1 is a schematic diagram of a refrigerator 10 according to an embodiment of the present application; Fig. 2 is a schematic diagram of the refrigerator 10 shown in Fig. 1 with an upper door body 11 hidden. The refrigerator of the present embodiment may generally include a cabinet 12, a door body 11, and a refrigeration system (not shown in the figure). At least one storage chamber with a front opening may be defined within the cabinet 12, usually multiple chambers, such as a refrigerating storage chamber 121, a freezing storage chamber, a variable temperature storage chamber, and so on. The specific number and functions of storage chambers may be configured according to predetermined requirements. The cross door refrigerator shown in Figs. 1 and 2 is merely an example, and those skilled in the art may configure the specific number, functions and layout of storage chambers according to requirements.

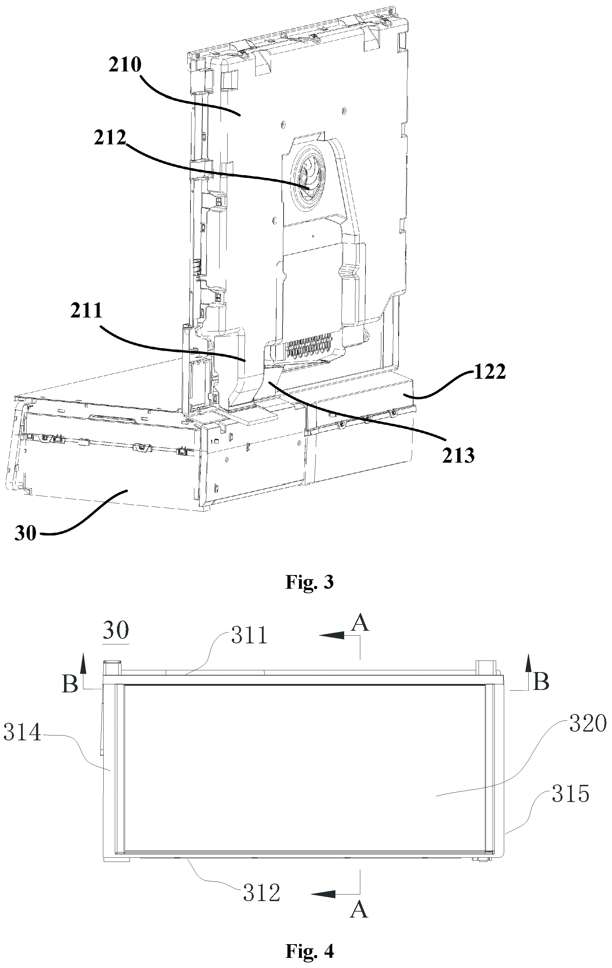

The refrigerator 10 of the present embodiment may be an air-cooled refrigerator. Fig. 3 is a schematic diagram of an air path for the refrigerator 10 according to an embodiment of the present application to supply to a fresh-keeping storage container 30. In Fig. 3, in order to show a refrigerating air duct assembly 210, other components in the refrigerating storage chamber 121 except the fresh-keeping storage container and the refrigerating air duct assembly 210 are hidden, such as a refrigerating inner liner, a chamber insulation layer, etc. An air path system is disposed in the cabinet, and a fan 131 is used to send the cooling airflow that has undergone heat exchange with a heat exchanger (evaporator, not shown in the figure) to the storage chambers through air supply outlets, and then return to an air duct through return air outlets to achieve refrigeration. Since the cabinet, the door body, and the refrigeration system of such refrigerators are well known to those skilled in the art and easy to implement, in order not to obscure and blur the improvement points of the present application, the cabinet, the door body, and the refrigeration system themselves will not be described in detail below.

Multiple storage chambers may be divided by shelves, partitions, drawers, etc., to achieve corresponding storage functions, such as fresh storage, freezing, dry storage, etc. One or more fresh-keeping storage containers 30 may be arranged in the refrigerator 10 of the present embodiment. In some optional embodiments, the fresh-keeping storage container 30 may be disposed in one or more of the multiple storage chambers mentioned above, and through a magnetic field and a temperature control, a long-term high-quality fresh storage of meat, fish and other food materials may be achieved. For example, the fresh-keeping storage container 30 may be arranged in any one of the refrigerating storage chamber 121, a freezing storage chamber, and a variable temperature storage chamber. As another example, multiple fresh-keeping storage containers 30 may be simultaneously disposed in a storage chamber as needed. Fig. 2 shows an example of disposing one fresh-keeping storage container 30 in the refrigerating storage chamber 121. The fresh-keeping storage container 30 may be a drawer-type storage container. Other drawer-type storage containers 122 may also be disposed in the refrigerating storage chamber 121 in addition to the fresh-keeping storage container 30. For example, Fig. 2 shows an instance where in addition to the fresh-keeping storage container 30, the refrigerating storage chamber 121 is further provided with three other drawer-type storage containers 122, one of which is arranged laterally alongside the fresh-keeping storage container 30.

The refrigerator 10 of the present embodiment achieves fresh-keeping storage effects through a precise temperature control of the fresh-keeping storage container 30 combined with the influence of a magnetic field. In order to achieve precise temperature control, the air path system of the refrigerator of the present embodiment may provide a dedicated fresh-keeping container air supply channel 211 for the fresh-keeping storage container 30, and through an adjustment of the fresh-keeping container air supply channel 211, a control of the on/off and/or a magnitude of to the fresh-keeping storage container 30 is achieved.

The refrigerator 10 may be an air-cooled refrigerator, and an air duct assembly is disposed at the rear of the cabinet 12, the air duct assembly being used to define an air supply duct that provides . In some optional embodiments, a refrigerating air duct assembly 210 is disposed at the back of the refrigerating storage chamber 121. A refrigerating air supply fan 212 is disposed within the refrigerating air duct assembly 210, and the refrigerating air supply fan 212 promotes the formation of from an evaporator chamber where an evaporator of the refrigerator 10 is located through the air supply duct to the storage chambers. The fresh-keeping container air supply channel 211 serves as one of multiple air supply ducts provided by the refrigerating air duct assembly 210, and the on/off and/or a magnitude of its airflow may be controllably adjusted. For example, an independent adjustable damper may be disposed within the fresh-keeping container air supply channel 211; alternatively, the refrigerating air duct assembly 210 may be provided with other types of airflow distribution devices that can controllably adjust the airflow of the fresh-keeping container air supply channel 211.

The refrigerating air supply fan 212 draws in a low-temperature air from the evaporation chamber at the rear, and then uses an airflow distribution device (not shown in the figure) to distribute the cooling airflow, wherein the fresh-keeping container air supply channel 211 may be controllably adjusted for opening/closing and magnitude.

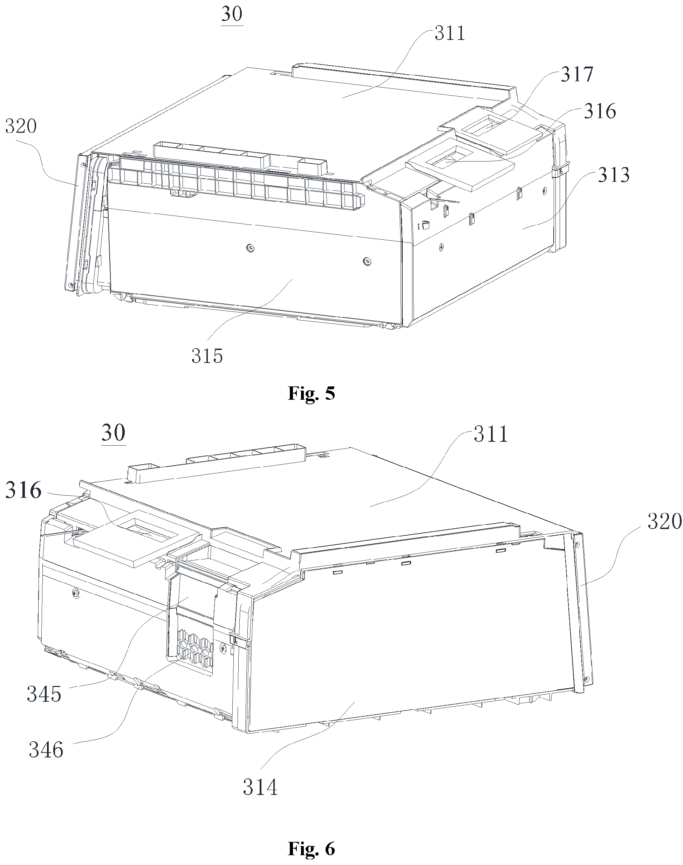

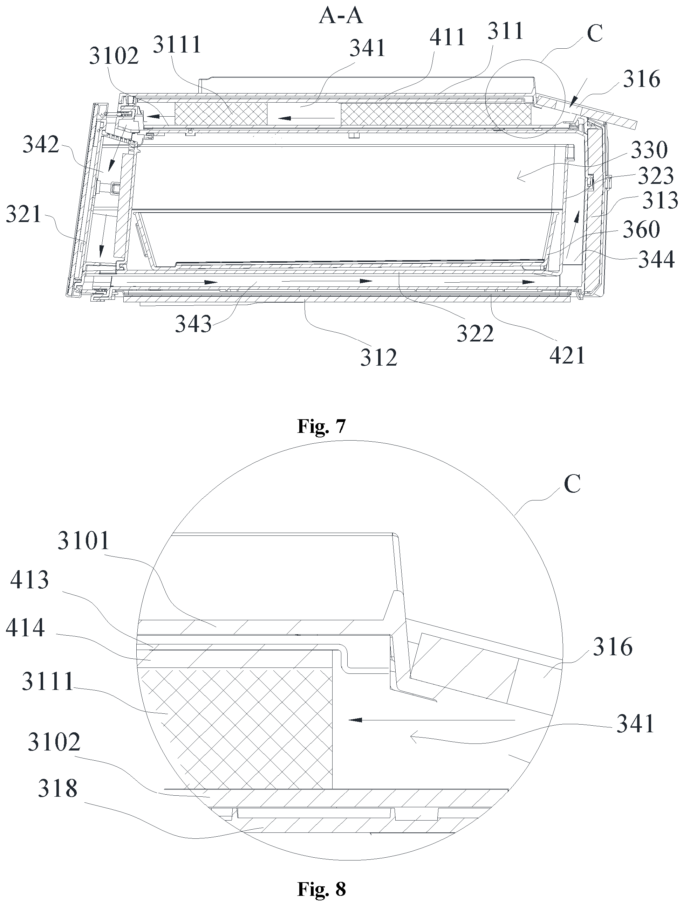

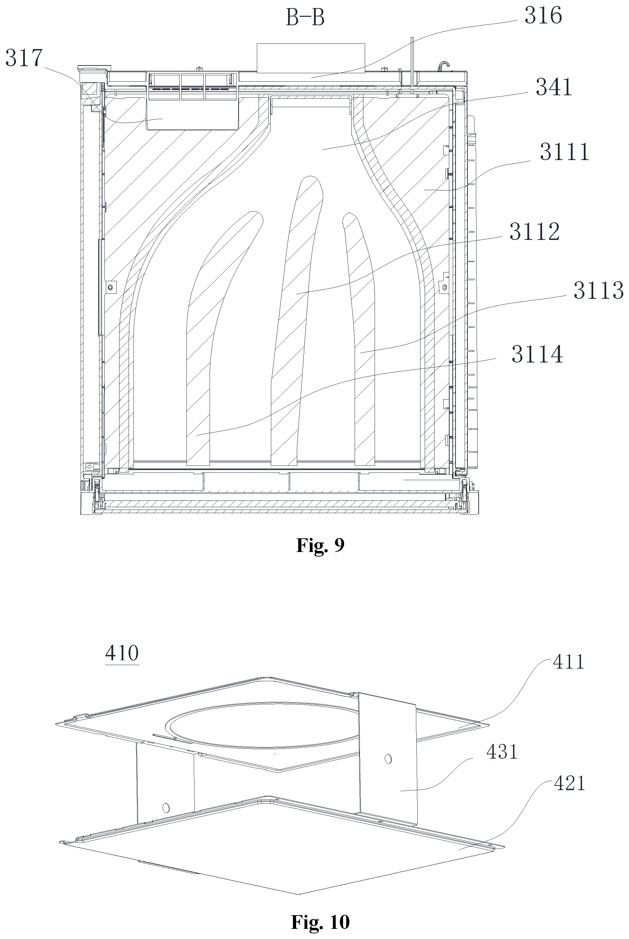

Fig. 4 is a front view of a fresh-keeping storage container 30 according to an embodiment of the present application. Fig. 5 is a schematic diagram of the fresh-keeping storage container 30 according to an embodiment of the present application from another angle. Fig. 6 is a schematic diagram of the fresh-keeping storage container 30 according to an embodiment of the present application from yet another angle. Fig. 7 is a cross-sectional view of the fresh-keeping storage container shown in Fig. 4 along a direction A-A; Fig. 8 is a partial enlarged view of a portion C in Fig. 7, and Fig. 9 is a cross-sectional view of Fig. 4 along a direction B-B.

The fresh-keeping storage container 30 may have a drawer-type structure. The fresh-keeping storage container may include a barrel body 310 and a drawer 320. The barrel body 310 has an overall box shape and has a front opening, that is, the barrel body 310 includes a barrel body top wall 311, a barrel body bottom wall 312, a barrel body rear wall 313, a barrel body left side wall 314, and a barrel body right side wall 315. The drawer 320 is slidably disposed inside the barrel body 310 through the front opening. The drawer 320 includes a drawer bottom plate 322, a drawer rear plate 323, a drawer left side plate, a drawer right side plate, and a drawer end plate assembly 321, wherein the drawer end plate assembly 321 is disposed at the front of the drawer 320. When the drawer 320 is placed in the barrel body 310, the drawer end plate assembly 321 can seal the front opening of the barrel body 310, so that a closed storage environment is formed inside the barrel body 310, and thus the drawer 320 and the barrel body 310 jointly define a fresh-keeping storage space 330. When the drawer 320 is pulled out of the barrel body 310, the drawer 320 exposes a top space for placing and removing stored items.

In some embodiments, the barrel body 310 may include an inner barrel body 318. The barrel body 310 may further include a barrel shell 3101 disposed outside the inner barrel body 318, and the barrel shell 3101 serves as an outermost layer of the fresh-keeping storage container 30. In some embodiments, the barrel shell 3101 may also not be disposed outside some side walls of the inner barrel body 318, and other thermal insulation components or injection molded parts or adjacent components in the refrigerator may be used as the outermost layer of the fresh-keeping storage container 30. The inner barrel body 318 has a fresh-keeping storage space 330 therein for placing stored items. In the case of using a drawer-type structure, the inner barrel body 318 may jointly define the fresh-keeping storage space 330 with the drawer 320. The inner barrel body 318 may be formed by splicing multiple inner liner components through a snap-fit or other connection methods. For example, the inner liner components may be split into three to four inner liner components according to the convenience requirements of assembly. The inner barrel body 318 serves as an inner layer of the barrel body for arranging the drawer 320.

In embodiments where the barrel shell 3101 is provided, an interlayer space may be provided between the barrel shell 3101 and at least one side wall of the inner barrel body 318. That is, there is a gap between the barrel shell 3101 and the inner barrel body 318. For example, the barrel body top wall 311, the barrel body bottom wall 312, the barrel body rear wall 313, the barrel body left side wall 314, and the barrel body right side wall 315 may respectively form an interlayer space.

The first magnetic field assembly 411 is disposed outside a side wall of the inner barrel body 318; and a conveying air duct for to pass through is formed between the first magnetic field assembly 411 and the side wall of the inner barrel body 318. The conveying air duct may be at least a part of an internal air duct of the fresh-keeping storage container 30, which may be an air supply duct connected to an air inlet for introducing , or a return air duct connected to a return air outlet for sending out an airflow, or a transitional air duct between the air supply duct and the return air duct.

The first magnetic field assembly 411 is disposed outside a side wall of the inner barrel body 318; for example, the first magnetic field assembly 411 may be disposed on the barrel body top wall 311 or the barrel body bottom wall 312, that is, disposed above a top wall of the inner barrel body 318 or below a bottom wall of the inner barrel body 318, or for example, the first magnetic field assembly 411 may also be disposed on the barrel body left side wall 314 or the barrel body right side wall 315. Figs. 4 to 9 show an embodiment where the first magnetic field assembly 411 is disposed on the barrel body top wall 311. Those skilled in the art may dispose the first magnetic field assembly 411 on the barrel body top wall 311, the barrel body bottom wall 312, the barrel body left side wall 314, or the barrel body right side wall 315 according to the structural characteristics of the fresh-keeping storage container 30.

A conveying air duct for to pass through is formed between the first magnetic field assembly 411 and the side wall of the inner barrel body, taking an air supply section 341 as the conveying air duct for an internal air path of the fresh-keeping storage container 30 as an example for introduction. The first magnetic field assembly 411 may form an air supply section 341 of the internal air path with the inner barrel body 318, and the air supply section 341 is used for the cooling airflow of the fresh-keeping storage container 30 to pass through. When the first magnetic field assembly 411 is disposed on the barrel body top wall 311, the first magnetic field assembly 411 is disposed above the top wall of the inner barrel body 318, and the conveying air duct is communicated with a fresh-keeping container air supply channel that provides to the fresh-keeping storage container 30, and serves as the air supply section 341 for introducing the cooling airflow. The air supply section 341 may be disposed below the first magnetic field assembly 411; when the first magnetic field assembly 411 is disposed on the barrel body bottom wall 312, the air supply section 341 may be disposed above the first magnetic field assembly 411; when the first magnetic field assembly 411 is disposed on the barrel body left side wall 314, the air supply section 341 may be disposed on the right side of the first magnetic field assembly 411; when the first magnetic field assembly 411 is disposed on the barrel body right side wall 315, the air supply section 341 may be disposed on the left side of the first magnetic field assembly 411.

In the relative positions of the first magnetic field assembly 411 and the air supply section 341 described above, the air supply section 341 is closer to the inner barrel body 318. During a refrigeration process, the fresh-keeping storage space 330 can be refrigerated more quickly, thereby accelerating a cooling speed, reducing an effective time for bacterial reproduction, and thus extending a fresh-keeping period. If the first magnetic field assembly 411 generates heat during the process of generating a magnetic field, the airflow flowing through the air supply section 341 can also carry away the heat from the first magnetic field assembly 411, reducing the influence of heat generation from the first magnetic field assembly 411 on a temperature distribution of the fresh-keeping storage space 330.

In some embodiments of the present application, a barrel body air supply outlet 316 is disposed at the rear of the top wall of the barrel body 310, and the barrel body air supply outlet 316 may be used to communicate with the fresh-keeping container air supply channel 211 that supplies air to the fresh-keeping storage container. The first magnetic field assembly 411 is disposed on the barrel body top wall 311, and the air supply section 341 is disposed below the first magnetic field assembly 411 and communicates with the barrel body air supply outlet 316.

The barrel body air supply outlet 316 is disposed in an area of the barrel body top wall 311 at a rear close to the barrel body rear wall 313. The area of the barrel body top wall 311 where the barrel body air supply outlet 316 is located may be configured to have a certain inclination angle to cooperate with the fresh-keeping container air supply channel 211. A barrel body return air outlet 317 is disposed on one lateral side of the barrel body air supply outlet 316 and is spaced apart from the barrel body air supply outlet 316. The barrel body return air outlet 317 may communicate with a return air area of the evaporator chamber. The airflow from the fresh-keeping storage container after a heat exchange is sent back to the evaporator chamber through the barrel body return air outlet 317. In some embodiments, the refrigerator may also be provided with a fresh-keeping container return air channel 213 communicating with the barrel body return air outlet 317 to directly send the airflow from the fresh-keeping storage container 30 after the heat exchange back to the evaporator chamber.

The fresh-keeping storage container 30 may further include an air duct member 3111. The air duct member 3111 is disposed between the first magnetic field assembly 411 and the side wall of the inner barrel body 318. The air duct member 3111 is configured to define the conveying air duct. In the embodiment where the first magnetic field assembly 411 is disposed on the barrel body top wall 311, the air duct member 3111 is disposed below the first magnetic field assembly 411 and is configured to define the conveying air duct (such as the air supply section 341). The air duct member 3111 may be a plastic air duct pipe or a foam member with an air duct groove.

In some embodiments, the air duct member 3111 has at least one flow dividing rib 3112, 3113, 3114 disposed in the conveying air duct, and the flow dividing ribs 3112, 3113, 3114 further divide the cooling airflow into multiple streams, so that the airflow flows uniformly through the barrel body top wall 311, ensuring a uniform temperature in a top space of the fresh-keeping storage container 30.

The air supply section 341 may be an air duct that gradually widens from a rear to a front toward both sides in an air supply direction from the barrel body air supply outlet 316. That is, a lateral width of the rear end of the air supply section 341 is substantially consistent with the barrel body air supply outlet 316; a lateral width of the front end of the air supply section 341 is only slightly smaller than the overall width of the storage container 30. The lateral sides of the air supply section 341 form continuous and gentle air guiding surfaces.

The rear ends of one or more flow dividing ribs 3112, 3113, 3114 respectively face toward the barrel body air supply outlet 316, and then extend according to the overall shape of the air supply section 341. An opening of an airflow channel facing the barrel body air supply outlet 316 is configured in a different size according to an airflow velocity. For example, the airflow channel close to the center directly facing the barrel body air supply outlet 316 is narrower, while the airflow channels close to both sides are wider. The airflow sizes in different airflow channels are adjusted by adjusting the sizes of the inlets of different airflow channels. Additionally, an extension length and an extension direction of the flow dividing ribs 3112, 3113, 3114 may also be distributed according to airflow distribution needs.

Fig. 9 shows an embodiment with three flow dividing ribs 3112, 3113, 3114. Those skilled in the art may adjust the number and the extension direction of the flow dividing ribs as needed to ensure that the can uniformly pass through the barrel body top wall. Among the three flow dividing ribs 3112, 3113, 3114, a flow dividing rib 3112 in the center directly facing the barrel body air supply outlet 316 has the longest length toward the barrel body air supply outlet 316, first dividing the airflow into a left airstream and a right airstream, and then using two flow dividing ribs 3113, 3114 on both sides to further distribute the airflow. That is, one end of each of a first flow dividing rib 3112, a second flow dividing rib 3113, and a third flow dividing rib 3114 respectively faces toward the barrel body air supply outlet 316, and respectively extends in a direction of the drawer end plate assembly 321 (from a rear to a front). The first flow dividing rib 3112 directly faces the barrel body air supply outlet 316, and the second flow dividing rib 3113 and the third flow dividing rib 3114 are respectively located on the lateral sides of the first flow dividing rib 3112. An end of the first flow dividing rib 3112 facing the barrel body air supply outlet 316 is closer to the barrel body air supply outlet 316 compared to the ends of the second flow dividing rib 3113 and the third flow dividing rib 3114 facing the barrel body air supply outlet 316. That is, the cooling airflow is first distributed by the first flow dividing rib 3112, and then further distributed by the second flow dividing rib 3113 and the third flow dividing rib 3114.

The temperature of the cooling airflow supplied from the evaporator chamber of the refrigerator 10 is generally low, possibly below minus ten degrees Celsius (may be -10°C to -25°C). If the cooling airflow directly contacts the stored items, the cooling airflow will obviously cause the stored items to be overcooled and freeze or suffer tissue damage, affecting a fresh-keeping storage effect. A necessary condition for the fresh-keeping storage container 30 to achieve a long-term fresh-keeping storage is to maintain a temperature in the fresh-keeping storage space 330 within a set fresh-keeping temperature range, and a refrigeration process should not have excessively low or high temperatures, especially the temperature in each area of the fresh-keeping storage space 330 should be uniform.

In order to avoid an excessively low temperature in the fresh-keeping storage space 330 near the conveying air duct, the air duct member 3111 may further include a thermal insulation layer 3102 disposed between the conveying air duct and the inner barrel body 318. In the embodiment where the first magnetic field assembly 411 is disposed on the barrel body top wall 311, the thermal insulation layer 3102 is disposed below the air supply section 341.

The thermal insulation layer 3102 may be made of thermal insulating foam material with a thickness ranging from 5 to 10 mm. Alternatively, the thermal insulation layer 3102 may be made of a vacuum insulation panel with a thickness ranging from 2 to 5 mm. Setting a corresponding thickness range according to the material of the thermal insulation layer can ensure both a cooling speed and avoid an excessively low local temperature. In other embodiments, if the temperature of the cooling airflow is higher (for example, above -7°C), a PE or an air layer may also be selected as the thermal insulation layer 3102.

Alternatively, the thermal insulation layer 3102 described above may also be replaced with a cold storage component. The cold storage component is disposed between the conveying air duct and the side wall of the inner barrel body 318. The cold storage assembly is configured to store cooling capacity when the conveying air duct is ventilating, and release the cooling capacity to the fresh-keeping storage space 330 through the side wall of the inner barrel body 318 when the conveying air duct stops ventilating.

The conveying air duct is close to the side wall of the inner barrel body 318, which can make the cooling speed of the inner barrel body 318 faster. Using a cold storage assembly can better reduce temperature fluctuations in the fresh-keeping storage space 330. When refrigeration stops, the internal temperature of the fresh-keeping storage container 30 rises more slowly and the temperature is more stable.

The cooperation of the conveying air duct described above with the inner barrel body 318 and a cold storage material can make the temperature more suitable for fresh-keeping storage temperature conditions.

An arrow direction in Fig. 7 indicates an internal airflow direction of the fresh-keeping storage container 30. The internal air path of the fresh-keeping storage container 30 is configured as follows: an airflow enters the rear end of the air supply section 341 (also referred to as the air supply section) of the internal air path of the fresh-keeping storage container 30 defined within the barrel body top wall from the barrel body air supply outlet 316, and then the airflow flows through the air supply section 341 from a rear to a front. At the front end of the air supply section 341, the airflow enters the top of an air passage section (also referred to as an end plate air path section) of the internal air path of the fresh-keeping storage container 30 defined within the drawer end plate assembly 321, and then the airflow flows through the air passage section 342 from a top to a bottom. At the bottom of the air passage section 342, the airflow enters a gap between the drawer bottom plate 322 and the barrel body bottom wall 312, which serves as a cold transfer section (also referred to as a bottom wall air path section) of the internal air path of the fresh-keeping storage container 30, and then the airflow flows through a first cold transfer section 343 from a front to a rear. At a connection position between the rear end of the drawer bottom plate 322 and the drawer rear plate 323 (i.e., the rear end of the cold transfer section 343), the airflow enters a gap between the drawer rear plate 322 and the barrel body rear wall 313, which can serve as an in-barrel return air section 344 (also referred to as a rear wall air path section). An inner barrel body return air outlet 346 is provided in the middle of the barrel body rear wall 313, and an inter-barrel return air section 345 is formed between the inner barrel body return air outlet 346 and the barrel body return air outlet 317 in the barrel body rear wall. The airflow finally reaches the barrel body return air outlet 317 from the inner barrel body return air outlet 346 via the inter-barrel return air section 345. That is, the air passage section 342 of the internal air path defined within the drawer end plate assembly 321 is communicated with the air supply section 341; a cold transfer section 343 communicated with the air passage section 342 is formed between a lower portion of the drawer 320 and the inner barrel body 318.

The internal air path of the fresh-keeping storage container 30 described above surrounds the entire fresh-keeping storage container 30 for one circuit. Without entering the fresh-keeping storage space 330 and thus not directly contacting the stored items, a sufficient heat exchange can be achieved to uniformly refrigerate and cool the fresh-keeping storage container 30.

In other optional embodiments, the internal air path of the fresh-keeping storage container 30 may also adopt other surrounding methods, for example, from a left side to a front, from a front of the drawer laterally to a right, and then from a right side back to a rear side, that is, surrounding the fresh-keeping storage container 30 laterally. In comparison, the internal air path that surrounds the fresh-keeping storage container 30 longitudinally has a better refrigeration effect.

Another necessary condition for the fresh-keeping storage container 30 to achieve a long-term fresh-keeping storage is applying a magnetic field for fresh-keeping in the fresh-keeping storage space 330. Through an in-depth research on the fresh-keeping effect, the magnetic field parameters of the fresh-keeping storage container 30 of the present embodiment are preferentially configured as an effective magnetic flux density range: 10-100GS (1-10mT), further may be set to 20-80GS, furthermore may be set to 40GS-60GS, such as 10GS, 20GS, 40GS, 60GS, 80GS, 100GS, etc., an effective magnetic field spacing range: 60-240mm, the effective magnetic field spacing range: 60-240mm, that is, the magnetic field can reach the above strength requirements within a distance range of 60mm to 240mm from a magnetic source component.

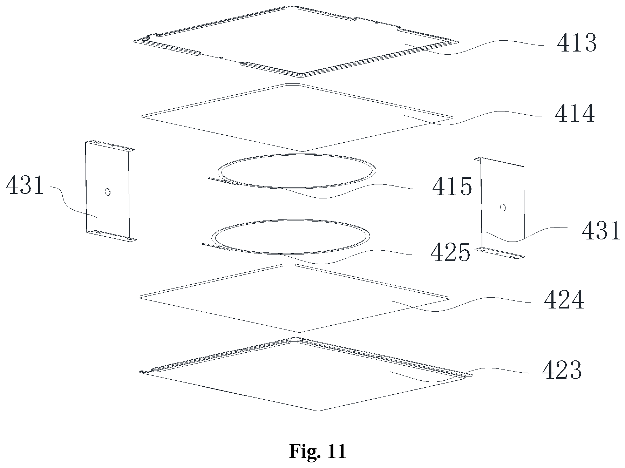

Fig. 10 is a schematic diagram of a magnetic field device 410 in the fresh-keeping storage container 30 according to an embodiment of the present application, and Fig. 11 is an exploded view of components of the magnetic field device 410 shown in Fig. 10. The magnetic field device 410 may include a first magnetic field assembly 411 and a second magnetic field assembly 421 disposed opposite to each other, and in some embodiments may further include a magnetic field connecting member 431 connecting the first magnetic field assembly 411 and the second magnetic field assembly 421.

The first magnetic field assembly 411 and the second magnetic field assembly 421 are disposed opposite to each other, and may be respectively disposed on opposite sides of the barrel body 310 of the fresh-keeping storage container 30, for example, respectively disposed on the barrel body top wall 311 and the barrel body bottom wall 312, or on the barrel body left side wall 314 and the barrel body right side wall 315. In embodiments where the fresh-keeping storage container 30 uses a drawer-type structure, a spacing between the barrel body top wall 311 and the barrel body bottom wall 312 is smaller while an area is larger, and the first magnetic field assembly 411 and the second magnetic field assembly 421 are preferentially disposed on the barrel body top wall 311 and the barrel body bottom wall 312.

The first magnetic field assembly 411 and the second magnetic field assembly 421 may adopt a substantially same structure. For example, the first magnetic field assembly 411 may include a first magnetic source plate 414 and a first magnetic conductive plate 413, and in some embodiments the first magnetic field assembly 411 may further include a first electromagnetic coil 415; correspondingly, the second magnetic field assembly 421 may include a second magnetic source plate 424 and a second magnetic conductive plate 423, and in some embodiments the second magnetic field assembly 421 may further include a second electromagnetic coil 425. The first magnetic conductive plate 413 may be disposed on the inner side of the barrel shell 3101, and the first magnetic source plate 414 attached to the inner side of the first magnetic conductive plate 413. That is, a fixed mounting structure for the first magnetic field assembly 411 may be disposed on the inner side of the barrel shell 3101, the first magnetic conductive plate 413 cooperates with the fixed mounting structure described above, and the first magnetic source plate 414 attached to the inner side of the first magnetic conductive plate 413, opposite to the air duct member 3111.

The first magnetic source plate 414 and the second magnetic source plate 424 may be permanent magnetic plates with a uniform magnetization. Considering a cooperation with the first magnetic conductive plate 413 and the second magnetic conductive plate 423, the permanent magnetic plates may be made of a permanent magnetic material with a certain flexibility. For example, a flexible rubber magnetic plate made by compounding a bonded ferrite magnetic powder with a synthetic rubber through a calendering forming process may be used. The first magnetic conductive plate 413 and the second magnetic conductive plate 423 are made of a material with a low coercivity and a high magnetic permeability.

The first magnetic field assembly 411 and the second magnetic field assembly 421 may respectively cover corresponding sides of the fresh-keeping storage space 330. In embodiments where the first magnetic field assembly 411 and the second magnetic field assembly 421 are respectively disposed on a top surface and a bottom surface of the fresh-keeping storage container 30, the first magnetic field assembly 411 may cover the top surface of the fresh-keeping storage space 330, while the second magnetic field assembly 421 may cover the bottom surface of the fresh-keeping storage space 330. The magnetic field directions of the first magnetic source plate 414 and the second magnetic source plate 424 may be set to be the same, that is, the opposite magnetic poles of the first magnetic source plate 414 and the second magnetic source plate 424 are heterogeneous magnetic poles, which can further ensure a uniformity of the magnetic field.

The magnetic field connecting member 431 magnetically connects the first magnetic field assembly 411 and the second magnetic field assembly 421 from both sides. The magnetic field connecting member 431 may be made of the same material as the first magnetic conductive plate 413 and the second magnetic conductive plate 423. In embodiments where the first magnetic field assembly 411 and the second magnetic field assembly 421 are respectively disposed on the top surface and the bottom surface of the fresh-keeping storage container 30, the magnetic field connecting member 431 may be respectively arranged on a left side and a right side of the fresh-keeping storage container 30, with their tops connected to the first magnetic field assembly 411 and their bottoms connected to the second magnetic field assembly 421. The first magnetic field assembly 411, the second magnetic field assembly 421, and the magnetic field connecting member 431 on both sides form a magnetic flux path surrounding the exterior of the fresh-keeping storage space 330, while the fresh-keeping storage space 330 between the first magnetic field assembly 411 and the second magnetic field assembly 421 forms an internal magnetic field. The exterior magnetic flux path provides a closed path for magnetic field lines of the internal magnetic field, thereby allowing a magnetic field convergence, improving the uniformity of the internal magnetic field, and simultaneously reducing a magnetic field release to the exterior of the fresh-keeping storage container 30, reducing an interference to other external components (such as avoiding magnetization of other components).

The first electromagnetic coil 415 and the second electromagnetic coil 425 may be respectively located at the central positions of the first magnetic source plate 414 and the second magnetic source plate 424, and a magnetic pole direction of the magnetic field formed after energization is consistent with the abutting first magnetic source plate 414 and second magnetic source plate 424. The heat generated when the first electromagnetic coil 415 and the second electromagnetic coil 425 operate can be carried away by the cooling airflow, thereby avoiding the influence of their heat generation on a fresh-keeping storage.

Thus far, those skilled in the art should recognize that although multiple exemplary embodiments of the present application have been shown and described in detail herein, many other variations or modifications conforming to the principles of the present application can still be directly determined or derived from the disclosed contents of the present application without departing from the spirit and scope of the present application. Therefore, the scope of the present application should be understood and recognized as covering all such other variations or modifications.

## Claims

1. A fresh-keeping storage container, comprising:
an inner barrel body, having a fresh-keeping storage space therein for placing stored items;
a first magnetic field assembly, disposed outside a side wall of the inner barrel body; and a conveying air duct for to pass through is formed between the first magnetic field assembly and the side wall of the inner barrel body.

2. The fresh-keeping storage container according to claim 1, further comprising:
an air duct member, disposed between the first magnetic field assembly and the side wall of the inner barrel body, and configured to define the conveying air duct.

3. The fresh-keeping storage container according to claim 2, wherein
the air duct member is provided with a thermal insulation layer between the conveying air duct and the side wall of the inner barrel body.

4. The fresh-keeping storage container according to claim 3, wherein
the thermal insulation layer is made of a thermal insulating foam material, the thickness of the thermal insulating foam material ranging from 5 to 10 mm; or
the thermal insulation layer is made of a vacuum insulation panel, the thickness of the vacuum insulation panel ranging from 2 to 5 mm.

5. The fresh-keeping storage container according to claim 2, wherein
a cold storage component is disposed between the conveying air duct and the side wall of the inner barrel body, the cold storage component stores cooling capacity when the conveying air duct is ventilating, and releases the cooling capacity to the fresh-keeping storage space through the side wall of the inner barrel body when the conveying air duct stops ventilating.

6. The fresh-keeping storage container according to claim 2, wherein
the air duct member has at least one flow dividing rib disposed in the conveying air duct, the at least one flow dividing rib is configured to separate an airflow flowing through the conveying air duct into multiple airflow channels, and configured such that the airflow flowing through each of the multiple airflow channels is substantially equivalent.

7. The fresh-keeping storage container according to claim 2, wherein
the air duct member is made of a thermal insulating foam material.

8. The fresh-keeping storage container according to claim 2, further comprising:
a barrel shell, disposed outside the inner barrel body, and an interlayer space is provided between the barrel shell and at least one side wall of the inner barrel body,
the first magnetic field assembly and the air duct member are both disposed in the interlayer space.

9. The fresh-keeping storage container according to any one of claims 3-8, wherein the first magnetic field assembly comprises:
a first magnetic conductive plate, disposed on an inner side of a side wall of the barrel shell;
a first magnetic source plate, abutting against an inner side of the first magnetic conductive plate, opposite to the air duct member.

10. The fresh-keeping storage container according to claim 1, wherein
the first magnetic field assembly is disposed above a top wall of the inner barrel body, and the conveying air duct is communicated with a fresh-keeping container air supply channel that provides to the fresh-keeping storage container, and serves as an air supply section for introducing the cooling airflow.

11. The fresh-keeping storage container according to claim 10, wherein
the inner barrel body has a front opening; and the fresh-keeping storage container further comprises:
a drawer, slidably disposed in the inner barrel body, and the drawer comprises a drawer end plate assembly, the drawer end plate assembly seals the front opening when the drawer is placed in the inner barrel body, an air passage section is defined within the drawer end plate assembly, the air passage section is communicated with the air supply section; a cold transfer section is formed between a lower portion of the drawer and the inner barrel body and is communicated with the air passage section.

12. The fresh-keeping storage container according to claim 10, further comprising:
a second magnetic field assembly, disposed outside the side wall of the inner barrel body away from the first magnetic field assembly, thereby disposed opposite to the first magnetic field assembly, such that the fresh-keeping storage space is located between the first magnetic field assembly and the second magnetic field assembly.

13. The fresh-keeping storage container according to claim 12, further comprising:
at least one magnetic field connecting member, magnetically connecting the first magnetic field assembly and the second magnetic field assembly from two sides, such that the first magnetic field assembly, the second magnetic field assembly and the at least one magnetic field connecting member on the two sides form a magnetic flux path surrounding an exterior of the fresh-keeping storage space.

14. The fresh-keeping storage container according to claim 12, wherein
the first magnetic field assembly cooperates with the second magnetic field assembly to form a magnetic field in the fresh-keeping storage space, the magnetic field has an effective magnetic flux density ranging from 10-100GS, and an effective magnetic field spacing ranging from 60-240mm.

15. A refrigerator, comprising:
the fresh-keeping storage container according to any one of claims 1 to 14.
